# FASCICULE DE BREVET EUROPEEN

(11) **EP 3 014 175 B1**
(45) Date de publication et mention de la délivrance du brevet: **09.10.2019**
(21) Numéro de dépôt: 14747059.5
(22) Date de dépôt: 27.06.2014
(51) Int. Cl.: F21V 8/00, G01D 11/28, G02B 6/00

(54) **DISPOSITIF LUMINEUX**
BELEUCHTUNGSVORRICHTUNG
LIGHTING DEVICE

(30) Priorité: 28.06.2013 FR 1301526
(43) Date de publication de la demande: 04.05.2016
(73) Titulaire: Valeo Systemes Thermiques, 78320 Le Mesnil-Saint-Denis Cedex (FR)
(72) Inventeur: THORAILLER Maryline, 78320 le Mesnil Saint Dénis (FR); BOMBARD Stéphane, 78320 le Mesnil Saint Dénis (FR)
(74) Mandataire: Pothmann, Karsten
(86) Numéro de dépôt international: PCT/FR2014/000150
(87) Numéro de publication internationale: WO 2014/207328

(56) Documents cités:
- EP-A1- 0 962 694
- DE-A1-102008 042 472
- DE-A1-102009 027 792
- US-A1- 2003 099 116
- US-A1- 2008 055 935
- US-A1- 2008 239 721
- US-A1- 2010 027 286

## Description

La présente invention concerne le domaine des éclairages et particulièrement les éclairages de façade, par exemple des panneaux de contrôle des véhicules automobiles, dans lesquels différentes formes et dimensions d'éclairage sont généralement recherchées pour éclairer notamment des boutons de contrôle ou des témoins lumineux.

Plus spécifiquement, l'invention se rapporte à un dispositif lumineux comprenant une source lumineuse et un guide de lumière, ainsi qu'à un témoin lumineux et une planche de bord de véhicule automobile destinés notamment à un véhicule automobile comprenant un tel dispositif lumineux.

Le nombre de dispositifs lumineux présents dans l'habitacle d'un véhicule automobile augmente avec la sophistication des véhicules. Certains de ces dispositifs lumineux sont rendus visibles à l'utilisateur au moyen d'une source lumineuse éclairant une zone dédiée par l'intermédiaire d'un guide lumineux.

Dans de tels dispositifs, la répartition de la lumière sur l'ensemble de la zone à éclairer présente des difficultés. En effet, obtenir un éclairage homogène est d'autant plus complexe que la zone à éclairer présente une dimension selon une direction supérieure à celle de la source lumineuse employée. En particulier, il est difficile d'obtenir un éclairage uniforme dans le cas d'une zone à éclairer sous la forme d'une ligne ou d'un cercle.

US2010/0027286 et DE102008042472 décrivent des unités d'éclairage annulaires comportant des moyens pour dévier la lumière à l'intérieur du conduit de lumière.

Les documents EP0962694, US2003/0099116 et US2008/0055935 décrivent des dispositifs à guides optiques planaires avec des moyens pour dévier de manière interne la lumière injectée afin d'obtenir un rayonnement homogène.

Afin d'obtenir cet éclairage homogène, il est généralement nécessaire de multiplier le nombre de sources lumineuses. Cependant, l'utilisation d'un grand nombre de sources lumineuses présente des difficultés de mise en oeuvre, en particulier en termes d'encombrement et d'alimentation électrique.

De plus, un grand nombre de sources lumineuses peut produire outre une trop grande quantité de chaleur risquant d'interagir avec d'autres équipements adjacents une augmentation de la consommation d'énergie.

Ainsi, il existe un besoin pour fournir un dispositif lumineux permettant un éclairage homogène d'une zone à éclairer dont l'une des dimensions est supérieure à celle de la source lumineuse.

L'invention propose ainsi un dispositif lumineux comprenant une source lumineuse et un guide de lumière, le guide de lumière comprenant :
- un dioptre d'entrée configuré pour laisser entrer la lumière émise par la source lumineuse éclairant le dioptre d'entrée,
- un dioptre de sortie configuré pour laisser sortir la lumière du guide de lumière, remarquable en ce que le guide de lumière comprend en outre :
- des dioptres latéraux formant des surfaces en regard, et
- au moins un trou non-débouchant disposé entre le dioptre d'entrée et le dioptre de sortie, ledit trou non-débouchant étant réalisé à partir d'au moins un renfoncement d'une des surfaces formant dioptre latéral et configuré de sorte à ne pas déboucher sur la surface en regard formant dioptre latéral, les bords du trou non-débouchant formant des dioptres secondaires.

Avantageusement, le trou non-débouchant du dispositif lumineux selon l'invention permet de répartir les rayons lumineux issus d'une source lumineuse selon la direction principale sur une zone élargie du dioptre de sortie par rapport à l'art antérieur.

Le dispositif selon l'invention permet ainsi d'obtenir une répartition homogène des rayons lumineux sur le dioptre de sortie et, par conséquent un éclairage plus homogène, tout en limitant le nombre de sources lumineuses utilisées.

Le dispositif selon l'invention peut également comprendre une ou plusieurs des caractéristiques ci-dessous, considérées individuellement ou selon toutes les combinaisons techniquement possibles :
- le dispositif lumineux comprenant en outre au moins un dioptre additionnel en regard d'au moins un dioptre secondaire, et conformé de sorte que :
   - des rayons lumineux se propageant dans le guide de lumière et incidents au dioptre additionnel soient réfléchis par ledit dioptre additionnel en direction du dioptre de sortie, et
   - des rayons lumineux se propageant dans le guide de lumière et incidents au dioptre secondaire soient réfléchis par ledit dioptre secondaire en direction du dioptre additionnel ; et/ou
- le dispositif lumineux est conformé de sorte que :
   - au moins 50 % des rayons lumineux se propageant dans le guide de lumière et incidents au dioptre additionnel soient réfléchis par ledit dioptre additionnel en direction du dioptre de sortie, et
   - au moins 50 % des rayons lumineux se propageant dans le guide de lumière et incidents au dioptre secondaire soient réfléchis par ledit dioptre secondaire en direction du dioptre additionnel : et/ou
- le trou non-débouchant est configuré de sorte à permettre de limiter le dioptre d'entrée à une surface se trouvant au droit de la au moins une source lumineuse : et/ou - le trou non-débouchant présent une forme en V : et/ou
- la pointe du trou non-débouchant en forme de V est orientée en direction du maximum d'intensité lumineuse émise par la source : et/ou
- le trou non-débouchant à une épaisseur e comprise entre 10% et 70% de la distance séparant les dioptres latéraux au niveau dudit trou non-débouchant ; et/ou
- le dioptre d'entrée comprend au moins un élément dispersif de lumière ; et/ou
- le dioptre de sortie comprend au moins un élément dispersif de lumière ; et/ou
- l'élément dispersif de lumière est sous la forme d'au moins une lentille cylindrique ; et/ou
- la source lumineuse comprend au moins une diode électroluminescente disposée en regard du dioptre d'entrée.

L'invention se rapporte également à un témoin lumineux destiné notamment à un panneau de contrôle d'un véhicule automobile comprenant un dispositif lumineux selon l'invention.

L'invention se rapporte en outre à une planche de bord de véhicule automobile ayant une interface homme machine comprenant un dispositif lumineux selon l'invention.

L'invention sera mieux comprise à la lumière de la description suivante qui n'est donnée qu'à titre indicatif et qui n'a pas pour but de limiter ladite invention, accompagnée des figures ci-dessous :
- la figure 1 illustrant de façon schématique un dispositif lumineux selon l'invention.
- la figure 2 étant une vue schématique en perspective de côté d'un dispositif lumineux selon un mode de réalisation de l'invention.
- la figure 3 étant une coupe du dispositif lumineux représenté sur la figure 2, et
- la figure 4 étant une vue de côté du dispositif lumineux présenté sur la figure 2.

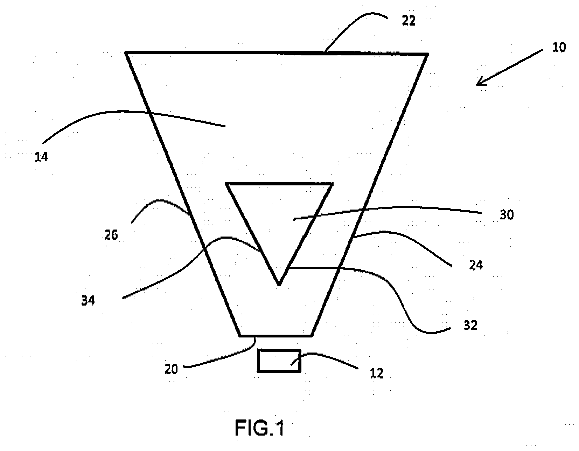

Comme illustrée aux figures 1 à 4, l'invention concerne un dispositif lumineux 10 comprenant au moins une source lumineuse 12 et un guide de lumière 14.

Avantageusement, le guide de lumière 14 est monobloc et/ou formé d'une seule matière. Ainsi la lumière se propage naturellement par réflexion totale à l'intérieur dudit guide de lumière 14 sans obstacle ou séparation entre les parties dudit guide qui pourraient nuire à la circulation de la lumière.

Le guide de lumière 14 comprend un dioptre d'entrée 20 et un dioptre de sortie 22. Le dioptre d'entrée 20 est configuré pour laisser entrer dans le guide de lumière 14 la lumière émise par la source lumineuse 12. Avantageusement, afin de limiter les pertes de rayons lumineux, la source lumineuse 12 est disposée en regard du dioptre d'entrée 20.

Afin de réduire l'encombrement et la consommation électrique, la source lumineuse 12 comprend avantageusement au moins une diode électroluminescente disposée en regard du dioptre d'entrée, La diode électroluminescente peut être remplacé par une source lumineuse équivalente, de type OLED, AMOLED ou encore FOLED.

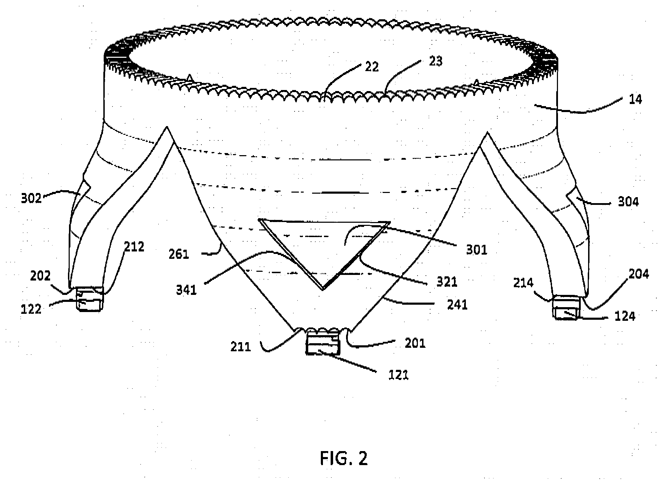

Selon le mode de réalisation illustré sur les figures 2 à 4, les dioptres d'entrée 201, 202, 203 et 204 peuvent comprendre des éléments dispersifs de lumière 211, 212, 213 et 214. Ces éléments dispersifs de lumière peuvent être sous la forme de lentilles hémicylindriques.

Avantageusement, les éléments dispersifs de lumière 21 permettent d'augmenter le nombre de rayons lumineux issus de la source 12 pénétrant dans le guide de lumière 14 par le dioptre d'entrée 20.

Le dioptre de sortie 22 est configuré pour laisser sortir la lumière du guide de lumière 14.

Selon le mode de réalisation représenté sur les figures 2 à 4, le dioptre de sortie 22 peut comprendre des éléments dispersifs de lumière 23. Ces éléments dispersifs de lumière 23 peuvent être sous la forme de lentilles hémicylindriques. Les éléments dispersifs 23 servent à disperser la lumière sortant du guide de lumière 14 par le dioptre de sortie 22 rendant ainsi la répartition de lumière en sortie du dispositif lumineux plus homogène.

Selon l'invention, le guide de lumière 14 comprend au moins un trou non-débouchant 30 disposé entre le dioptre d'entrée 20 et le dioptre de sortie 22 (voir figure 1).

Avantageusement, la présence d'un trou non-débouchant 30 dans le guide de lumière du dispositif lumineux selon l'invention permet d'obtenir un éclairage homogène au niveau du dioptre de sortie 22. Afin de permettre d'éclairer l'ensemble du dioptre de sortie, plusieurs sources lumineuses 121, 122, 123 et 124 peuvent être utilisées. Ainsi, le guide de lumière comprend plusieurs dioptres d'entrée 201, 202, 203, 204. Dans l'exemple de mode de réalisation des figures 2 à 4, le dispositif selon l'invention comprend quatre sources lumineuses 121, 122, 123 et 124 et quatre dioptres d'entrée 201, 202, 203, 204. Cependant il est possible de réduire le nombre de sources lumineuses et de dioptres d'entrée, par exemple à trois, tout en ayant un éclairage homogène au niveau du dioptre de sortie 22.

Il convient de trouver un juste équilibre entre la complexité du dispositif, croissante avec le nombre de sources lumineuses et de dioptres d'entrée et le besoin d'un éclairage homogène au niveau du dioptre de sortie. Pour les besoins les plus courants dans un véhicule automobile, les inventeurs ont pu déterminer que l'utilisation de quatre sources lumineuses associées à quatre dioptres d'entrée représente un juste équilibre. Selon le mode de réalisation des figures 2 à 4, le guide de lumière 14 comprend plusieurs trous non-débouchant 301, 302, 303, 304. De préférence, le guide de lumière 14 comprend autant de trous non-débouchant que de sources lumineuses.

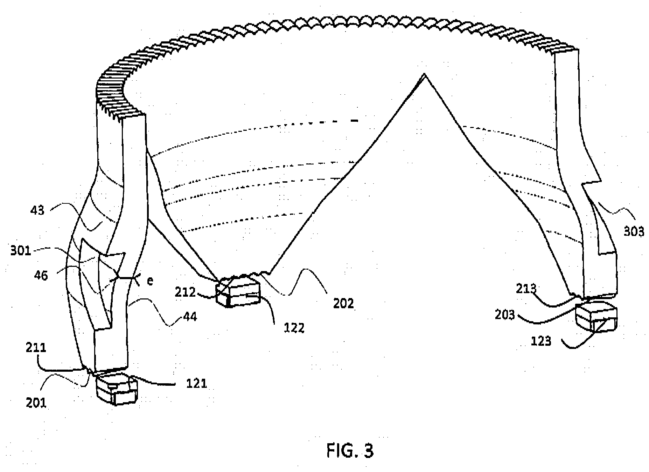

Plus spécifiquement et comme illustré sur la figure 3, chaque trou non-débouchant 301, est réalisé à partir d'au moins un renfoncement 46 d'une des surfaces formant dioptre latéral 43 et configuré de sorte à ne pas déboucher sur la surface en regard formant dioptre latéral 44. Bien que sur la figure 3, le renfoncement 46 se situe au niveau de la surface extérieure 43 formant dioptre latéral, le renfoncement 46 peut également se situer au niveau de la surface intérieure 44 formant dioptre latéral. De même, selon un mode de réalisation non représenté, le trou non-débouchant peut être réalisé à partir de deux renfoncements en regard. Chacun des renfoncements étant réalisés à partir d'une des surfaces formant dioptre latéral.

Au niveau de chaque trou non-débouchant 301, le guide de lumière 14 présente une épaisseur e. De préférence cette épaisseur e est comprise entre 10% et 70% de la distance séparant les dioptres latéraux 43 et 44 au niveau dudit trou non-débouchant 301.

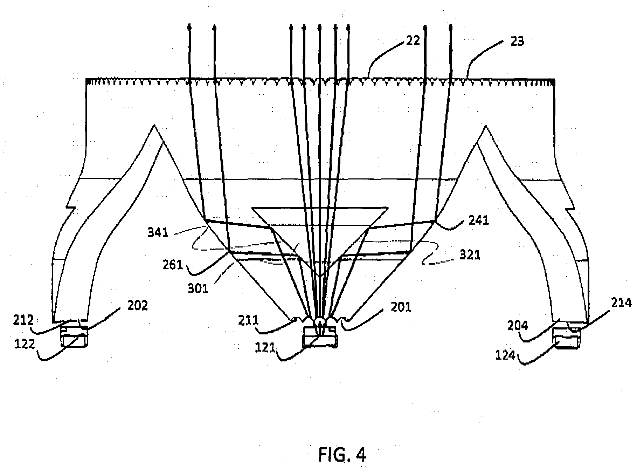

Avantageusement, la présence du trou non-débouchant 301 permet de laisser passer une partie de la lumière dans l'épaisseur e du guide de lumière et de réfléchir une autre partie de la lumière sur les bords du trou non-débouchant formant des dioptres secondaires 32 et 34 (voir figure 4).

La répartition des rayons lumineux au niveau du dioptre de sortie 22 dépend de la quantité de rayons lumineux passant dans l'épaisseur e du trou non-débouchant et de la quantité de rayons lumineux réfléchis par les dioptres secondaires 32 et 34. L'épaisseur de matière e permet donc d'ajuster l'homogénéité de la lumière au niveau du dioptre de sortie 22.

De préférence, le trou non-débouchant 30, 301, 302, 303, 304 est configuré de sorte à permettre de limiter la taille du dioptre d'entrée 20 à une surface se trouvant sensiblement au droit de la source lumineuse et d'une dimension sensiblement égale à celle de la source lumineuse 12.

Avantageusement, le trou non-débouchant 30, 301, 302, 303, 304 présente une forme en V. La pointe du trou non-débouchant en forme de V est de préférence orientée en direction du maximum d'intensité lumineuse émise par la source de lumière 12.

Le guide de lumière 14 peut comprendre en outre des dioptres additionnels 24 et 26 au regard des dioptres secondaires 32 et 34 formés par les bords du trou non-débouchant 30, 301, 302, 303, 304.

Les dioptres additionnels 24 et 26 sont conformés de sorte que les rayons lumineux, par exemple au moins 50%, de préférence au moins 75%, des rayons lumineux, se propageant dans le guide de lumière 14 lorsqu'ils sont incidents à un dioptre additionnel soient réfléchis par ledit dioptre additionnel en direction du dioptre de sortie 22. Les rayons lumineux peuvent être totalement ou au moins en grande partie réfléchis par ledit dioptre additionnel selon l'état de surface dudit dioptre additionnel.

De plus, le guide de lumière est configuré de sorte que les rayons lumineux, par exemple au moins 50%, de préférence au moins 75%. des rayons lumineux, qui se propagent dans le guide de lumière et arrivent incidents à un des dioptres secondaires 32 et 34 soient réfléchis par ledit dioptre secondaire en direction du dioptre additionnel 24 respectivement 26 correspondant. Les rayons lumineux peuvent être totalement ou au moins en grande partie réfléchis par ledit dioptre secondaire selon l'état de surface dudit dioptre secondaire.

Selon le mode de réalisation non limitatif représenté aux figures 2 à 4, le dispositif lumineux 10 peut représenter une forme sensiblement cylindrique avec un dioptre de sortie 22 ayant une forme sensiblement annulaire. Des dispositifs lumineux ayant ce type de forme permettent d'obtenir des témoins lumineux de type halo-ring.

Comme illustré sur la figure 4 les rayons lumineux représentés par les flèches sortant de la source lumineuse 121 pénètrent le guide de lumière 14 par un des dioptres d'entré 201, 202, 204. Le faisceau de rayon lumineux entrant est dispersé par les éléments dispersifs 21 disposés sur ledit dioptre d'entrée 201.

Une partie des rayons lumineux après avoir pénétré le guide de lumière 14, traverse directement, i.e. sans réflexion, ledit guide de lumière 14 du dioptre d'entrée 201 jusqu'au dioptre de sortie 22. Ces rayons lumineux passent dans l'épaisseur e du trou non-débouchant 301 et arrivent au niveau du dioptre de sortie 22 en suivant le cône d'émission propre à la source lumineuse 121. Ces rayons lumineux se propagent dans le guide de lumière 14 comme si ledit guide de lumière ne comprenait pas de trou non-débouchant.

Une partie des rayons lumineux après avoir pénétré le guide de lumière 14, sont réfléchis par l'un des deux dioptres secondaire 321, 341. Etant donnée la configuration des dioptres secondaires 321 et 341, ces rayons lumineux sont totalement ou au moins en grande partie réfléchis en direction des dioptres additionnels correspondant 241 et 261 respectivement. En d'autres termes, les rayons lumineux totalement ou au moins en grande partie réfléchis par le dioptre secondaire 321 sont totalement ou au moins en grande partie réfléchis en direction du dioptre additionnel 241 et les rayons lumineux totalement ou au moins en grande partie réfléchis par le dioptre secondaire 341 sont totalement ou au moins en grande partie réfléchis en direction du dioptre additionnel 261.

Les rayons lumineux réfléchis par les dioptres secondaires 321 et 341 sont ensuite totalement ou au moins en grande partie réfléchis par les dioptres additionnels correspondant 241, et 261 respectivement en direction du dioptre de sortie 22.

L'ensemble des rayons lumineux qui sortent du guide de lumière au niveau du dioptre de sortie 22 sont dispersés par les éléments dispersifs 23.

Ainsi, le trou non-débouchant du guide de lumière du dispositif lumineux selon l'invention permet un étalement du faisceau de rayons lumineux se propageant dans le guide de lumière et, par conséquent d'obtenir un éclairage homogène au niveau du dioptre de sortie.

Le dispositif lumineux selon l'invention peut avantageusement être utilisé dans des témoins lumineux destinés notamment à une interface homme-machine d'un véhicule automobile, par exemple dans des dispositifs de type halo-ring, ou encore des bandes rétroéclairées. Et plus généralement des dispositifs lumineux dont la zone à éclairer est sensiblement plus grande que la dimension des sources lumineuses utilisées.

## Revendications

1. Dispositif lumineux (10) comprenant une source lumineuse (12) et un guide de lumière (14), le guide de lumière comprenant :
- un dioptre d'entrée (20) configuré pour laisser entrer la lumière émise par la source lumineuse éclairant le dioptre d'entrée,
- un dioptre de sortie (22) configuré pour laisser sortir la lumière du guide de lumière,
le guide de lumière comprenant en outre :
- des dioptres latéraux (43, 44) formant des surfaces en regard, et
- au moins un trou non-débouchant (30) disposé entre le dioptre d'entrée et le dioptre de sortie, ledit trou non-débouchant (30) étant réalisé à partir d'au moins un renfoncement (46) d'une des surfaces formant dioptre latéral (43) et configuré de sorte à ne pas déboucher sur la surface en regard formant dioptre latéral (44), les bords du trou non-débouchant formant des dioptres secondaires (32, 34),
le dispositif comprenant en outre au moins un dioptre additionnel (24) en regard d'au moins un dioptre secondaire (32, 34), et conformé de sorte que :
- des rayons lumineux se propageant dans le guide de lumière et incident au dioptre additionnel soient réfléchis par ledit dioptre additionnel en direction du dioptre de sortie, et
- des rayons lumineux se propageant dans le guide de lumière et incident au dioptre secondaire soient réfléchis par ledit dioptre secondaire en direction du dioptre additionnel,
**caractérisé en ce que** le dispositif est conformé de sorte que :
- au moins 50 % des rayons lumineux se propageant dans le guide de lumière et incident au dioptre additionnel soit réfléchis par ledit dioptre additionnel en direction du dioptre de sortie, et
- au moins 50 % des rayons lumineux se propageant dans le guide de lumière et incident au dioptre secondaire soit réfléchis par ledit dioptre secondaire en direction du dioptre additionnel.

2. Dispositif selon la revendication précédente, dans lequel le trou non-débouchant est configuré de sorte à permettre de limiter le dioptre d'entrée à une surface se trouvant au droit de la au moins une source lumineuse.

3. Dispositif selon l'une quelconque des revendications précédentes, dans lequel le trou non-débouchant (30) présent une forme en V.

4. Dispositif selon l'une quelconque des revendications précédentes, dans lequel la pointe du trou non-débouchant (30) en forme de V est orientée en direction du maximum d'intensité lumineuse émise par la source (12).

5. Dispositif selon l'une quelconque des revendications précédentes, dans lequel le trou non-débouchant à une épaisseur e comprise entre 10% et 70% de la distance séparant les dioptres latéraux (43, 44) au niveau dudit trou non-débouchant.

6. Dispositif selon l'une quelconque des revendications précédentes, dans lequel le dioptre d'entrée comprend au moins un élément dispersif de lumière (201).

7. Dispositif selon l'une quelconque des revendications précédentes, dans lequel le dioptre de sortie comprend au moins un élément dispersif de lumière (22).

8. Dispositif selon l'une des revendications 6 ou 7, dans lequel l'élément dispersif de lumière est sous la forme d'au moins une lentille hémicylindrique (201).

9. Dispositif selon l'une quelconque des revendications précédentes, dans lequel la source lumineuse comprend au moins une diode électroluminescente disposée en regard du dioptre d'entrée.

10. Témoin lumineux destiné notamment à une interface homme machine d'un véhicule automobile comprenant un dispositif lumineux selon l'une quelconque des revendications précédentes.

11. Interface homme machine d'un véhicule automobile comprenant un dispositif lumineux selon l'une des revendications 1 à 9.

12. Tableau de commande de véhicule automobile comprenant une interface homme machine selon la revendication 11.

## Patentansprüche

1. Leuchtvorrichtung (10), umfassend eine Lichtquelle (12) und einen Lichtleiter (14), wobei der Lichtleiter umfasst:
- einen Eintrittsdiopter (20), der dazu ausgestaltet ist, das von der Lichtquelle emittierte, den Eintrittsdiopter beleuchtende Licht eintreten zu lassen,
- einen Austrittsdiopter (22), der dazu ausgestaltet ist, das Licht des Lichtleiters austreten zu lassen, wobei der Lichtleiter ferner umfasst:
- seitliche Diopter (43, 44), die einander gegenüber liegende Flächen bilden, und
- mindestens eine nicht durchgehende Öffnung (30), die zwischen dem Eintrittsdiopter und dem Austrittsdiopter angeordnet ist, wobei die nicht durchgehende Öffnung (30) ausgehend von mindestens einer Vertiefung (46) einer einen seitlichen Diopter (43) bildenden Flächen ausgeführt ist und so ausgestaltet ist, dass sie auf der den seitlichen Diopter (44) bildenden gegenüberliegende Fläche nicht durchgeht, wobei die Ränder der nicht durchgehenden Öffnung sekundäre Diopter (32, 34) bilden,
wobei die Vorrichtung ferner mindestens einen zusätzlichen Diopter (24) umfasst, der mindestens einem sekundären Diopter (32, 34) gegenüber liegt und so ausgestaltet ist, dass:
- Lichtstrahlen, die sich im Lichtleiter ausbreiten und am zusätzlichen Diopter einfallen, von dem zusätzlichen Diopter in Richtung des Austrittsdiopters reflektiert werden, und
- Lichtstrahlen, die sich im Lichtleiter ausbreiten und am sekundären Diopter einfallen, von dem sekundären Diopter in Richtung des zusätzlichen Diopters reflektiert werden, **dadurch gekennzeichnet, dass** die Vorrichtung so ausgestaltet ist, dass:
- mindestens 50 % der Lichtstrahlen, die sich im Lichtleiter ausbreiten und am zusätzlichen Diopter einfallen, von dem zusätzlichen Diopter in Richtung des Austrittsdiopters reflektiert werden, und
- mindestens 50 % der Lichtstrahlen, die sich im Lichtleiter ausbreiten und am zusätzlichen Diopter einfallen, von dem zusätzlichen Diopter in Richtung des Austrittsdiopters reflektiert werden.

2. Vorrichtung nach dem vorhergehenden Anspruch, wobei die nicht durchgehende Öffnung so ausgestaltet ist, dass sie es ermöglicht, den Eintrittsdiopter auf eine Fläche zu begrenzen, die sich direkt unter der mindestens einen Lichtquelle befindet.

3. Vorrichtung nach einem der vorhergehenden Ansprüche, wobei die nicht durchgehende Öffnung (30) eine V-Form aufweist.

4. Vorrichtung nach einem der vorhergehenden Ansprüche, wobei die Spitze der nicht durchgehenden V-förmigen Öffnung (30) in Richtung des von der Quelle (12) emittierten Helligkeitsmaximums ausgerichtet ist.

5. Vorrichtung nach einem der vorhergehenden Ansprüche, wobei die nicht durchgehende Öffnung eine Dicke e zwischen 10 % und 70 % des Abstands zwischen den seitlichen Dioptern (43, 44) auf Höhe der nicht durchgehenden Öffnung hat.

6. Vorrichtung nach einem der vorhergehenden Ansprüche, wobei der Eintrittsdiopter mindestens ein Licht streuendes Element (201) umfasst.

7. Vorrichtung nach einem der vorhergehenden Ansprüche, wobei der Austrittsdiopter mindestens ein Licht streuendes Element (22) umfasst.

8. Vorrichtung nach einem der Ansprüche 6 oder 7, wobei das Licht streuende Element in Form mindestens einer halbzylindrischen Linse (201) vorliegt.

9. Vorrichtung nach einem der vorhergehenden Ansprüche, wobei die Lichtquelle mindestens eine Leuchtdiode umfasst, die gegenüber dem Eintrittsdiopter angeordnet ist.

10. Kontrollleuchte, die insbesondere für eine Mensch-Maschine-Schnittstelle eines Kraftfahrzeugs bestimmt ist, umfassend eine Leuchtvorrichtung nach einem der vorhergehenden Ansprüche.

11. Mensch-Maschine-Schnittstelle eines Kraftfahrzeugs, umfassend eine Leuchtvorrichtung nach einem der Ansprüche 1 bis 9.

12. Bedienfeld eines Kraftfahrzeugs, umfassend eine Mensch-Maschine-Schnittstelle nach Anspruch 11.

## Claims

1. Lighting device (10) comprising a light source (12) and a light guide (14), the light guide comprising:
- an entry optical interface (20) configured to allow the entry of the light emitted by the light source illuminating the entry optical interface,
- an exit optical interface (22) configured to allow the light to exit from the light guide,
the light guide furthermore comprising:
- lateral optical interfaces (43, 44) forming opposing surfaces, and
- at least one blind hole (30) disposed between the entry optical interface and the exit optical interface, said blind hole (30) being formed starting from at least one indentation (46) in one of the surfaces forming a lateral optical interface (43) and configured so as not to open out onto the opposing surface forming a lateral optical interface (44), the edges of the blind hole forming secondary optical interfaces (32, 34),
the device furthermore comprising at least one additional optical interface (24) facing at least one secondary optical interface (32, 34), and configured such that:
- light rays propagating within the light guide and incident on the additional optical interface are reflected by said additional optical interface in the direction of the exit optical interface, and
- light rays propagating within the light guide and incident on the secondary optical interface are reflected by said secondary optical interface in the direction of the additional optical interface,
**characterized in that** the device is configured such that:
- at least 50 % of the light rays propagating within the light guide and incident on the additional optical interface is reflected by said additional optical interface in the direction of the exit optical interface, and
- at least 50 % of the light rays propagating within the light guide and incident on the secondary optical interface is reflected by said secondary optical interface in the direction of the additional optical interface.

2. Device according to the preceding claim, in which the blind hole is configured so as to allow the entry optical interface to be limited to a surface located directly in front of the at least one light source.

3. Device according to either one of the preceding claims, in which the blind hole (30) has a 'V' shape.

4. Device according to any one of the preceding claims, in which the point of the V-shaped blind hole (30) is oriented in the direction of the maximum light intensity emitted by the source (12).

5. Device according to any one of the preceding claims, in which the blind hole has a thickness e in the range between 10% and 70% of the distance separating the lateral optical interfaces (43, 44) on said blind hole.

6. Device according to any one of the preceding claims, in which the entry optical interface comprises at least one light-dispersive element (201).

7. Device according to any one of the preceding claims, in which the exit optical interface comprises at least one light-dispersive element (22).

8. Device according to either of Claims 6 and 7, in which the light-dispersive element takes the form of at least one hemi-cylindrical lens (201).

9. Device according to any one of the preceding claims, in which the light source comprises at least one light-emitting diode disposed facing the entry optical interface.

10. Indicator/warning light intended notably for a human-machine interface of an automobile vehicle comprising a lighting device according to any one of the preceding claims.

11. Human-machine interface of an automobile vehicle comprising a lighting device according to one of Claims 1 to 9.

12. Dashboard of an automobile vehicle comprising a human-machine interface according to Claim 11.
